# EUROPEAN PATENT APPLICATION

(11) **EP 4 015 157 A1**
(43) Date of publication of application: **22.06.2022**
(21) Application number: 21211734.5
(22) Date of filing: 01.12.2021
(51) Int. Cl.: B25J 9/02, B25J 9/04, B25J 15/00, B25J 9/10

(54) **SUPPORT AND MOVEMENT UNIT FOR A TOOL GRIPPING DEVICE**

(30) Priority: 15.12.2020 IT 202000030872
(71) Applicant: Faspar S.p.A., 20087 Robecco sul Naviglio (MI) (IT)
(72) Inventor: AIME, Paolo Ottavio, Milano (IT); FERRARIS, Andrea, Milano (IT)
(74) Representative: IP Sextant s.r.l.

(57) **Abstract**

A support and handling unit (1) comprises a frame (5), delimited between a base (6) and a top element (7), column elements (8) mutually spaced and parallel to each other to mutually connect the base ( 6) and the top element (7), guide members for slidingly guiding a first plate (9) and a second plate (10) along respective sides, opposite each other, of the frame (5), first handling members operatively connected to the first plate (9) and configured to determine the selective movement of the same along the frame (5) and second handling members operatively connected to the second plate (10) and configured to determine the selective movement of the second plate (10) along the frame (5) and at least one logic control unit (22) operatively connected to the first and second handling members and configured to control in a synchronized or non-synchronized way the operation of the first and second handling members.

## Description

The present invention relates to a support and handling unit configured to support and move a gripping device in turn configured to pick cutting equipment used in "slitter" type sheet metal cutting lines.

In the description and in the following claims explicit reference will be made to a support and handling unit to which a gripping device configured to pick cutting equipment such as circular or annular cutting blades, separators, rubber rings, etc. is operationally connected. usable for the processing of strips of metallic material wound on reels, but the person skilled in the art will have no difficulty in understanding how the present invention can be easily implemented also in other fields of the art, in particular in all those fields wherein it is necessary supporting and handling a gripping device configured to pick up or store tools from a magazine.

The use of a gripping device configured to selectively grasp the individual circular tools of the cutting equipment, to pick them up or store them with respect to a warehouse or, more generally, to a support arm or shaft is long known.

In general, such a gripping device is engaged movably along a support frame which can in turn be moved with respect to a warehouse in relation to which the cutting equipment is to be removed or stored.

The support unit is shaped like a column and therefore extends along a vertical direction, that is, along a direction normal to the floor on which the gripping device rests.

The support unit can be moved along a track and can be selectively operated in rotation around an axis of rotation substantially parallel to the vertical direction along which the support frame itself extends.

The gripping device, in turn, is slidingly associated with the support frame along the linear development direction, in order to position itself each time at a point for picking up or releasing a tool.

Handling members determine the movement of the gripping device along the support and handling frame.

The moving members comprise at least one motor unit operatively connected to the gripping device by means of a transmission comprising a belt wound in a ring around two pulleys and connected to the gripping device.

The pulleys are associated rotatable at opposite ends of the support and movement frame and at least one of them is motorized by means of the motor unit to selectively control the movement of the belt and, consequently, of the gripping device associated with it.

The gripping device, in fact, is bound to a branch of the belt in such a way that its movement determines the operation of the gripping device along the frame.

An alternative handling system may include the use of a telescopic cylinder instead of the belt transmission.

Such handling systems have some limitations of use with reference in particular to the ability to ensure precise handling in the case of cutting tools of high weight, such as those used in slitter-type cutting lines. The belt, in fact, has a minimum elasticity which causes vibrations or oscillations or in general a lower precision in the movement.

By replacing the belt transmission with a chain, the rigidity of the transmission can be increased but inertias are introduced, due to the greater weight of the chain, which negatively affect the ability to move the gripping device, with reference for example to the speeds and accelerations that can be achieved.

Furthermore, the use of a transmission belt and a drive based on an extendable piston is affected by limited safety with reference to the possible fall of the gripping device along the frame in the event of a disruption to the transmission or motor unit.

Document JP 2012069957 A describes an automated system for handling tools.

The object of the present invention is to allow in a simple and efficient way to provide a support and movement unit capable of ensuring precise and effective movement of a gripping device connected to it.

Another object of the present invention is to provide a support and handling unit for supporting and handling a gripping device for tools that is extremely safe and capable of preventing the gripping device from falling in the event of a disruption to the handling system.

The specific object of the invention is a support and handling group configured to support and move a gripping device, wherein the support and handling group includes:
- a frame, delimited between a base and a top element, and by column elements mutually spaced and parallel to each other, wherein the column elements mutually connect the base and the top element,
- guide members for slidingly guiding a first plate and a second plate along respective sides, opposite each other, of the frame, along a sliding direction,
- first handling members operatively connected to the first plate and configured to determine the selective movement of the first plate along the frame,
- second handling members operatively connected to the second plate and configured to determine the selective movement of the second plate along the frame, and
- at least one logic control unit operatively connected to the first moving parts and to the second moving parts and configured to control the operation of the first and second moving parts in a synchronized or unsynchronized way,
wherein the guide members comprise a first guide connected to at least two first column elements between the column elements and a second guide connected to at least two second column elements between the column elements facing the at least two first column elements.

According to another aspect of the invention, the first guide can comprise a pair of first rails wherein each rail of the first rails is constrained to a respective of the first column elements between the column elements and wherein the second guide comprises a pair of second rails wherein each rail of the second rails is constrained to a respective of the second column elements between the column elements, the first rails and the second rails being parallel to each other and to the column elements.

According to a further addition of the invention, the first rails and the second rails can extend for the entire length of the frame or substantially for the entire length of the frame.

According to an additional aspect of the invention, the first rails can extend inside the frame facing the second rails.

According to another aspect of the invention, the first guide can comprise first runners engaged along the first rails, wherein the first plate has opposite ends each connected to a rail of the first rails by at least one of the first runners and wherein the second guide comprises second runners slidingly engaged along the second rails, wherein the second plate has opposite ends each connected to a rail of the second rails by means of at least one of the second runners.

According to a further aspect of the invention, the first moving members can comprise a first motor unit connected to the first plate comprising a pinion in engagement along a first rack constrained to an element between the column elements to which the first plate is connected and wherein the second handling members comprise a second motor unit connected to the second plate and comprising a pinion in engagement along a second rack constrained to an element between the column elements to which the second plate is connected.

According to an additional aspect of the invention, the first rack and the second rack can extend for the entire length of the frame or substantially for the entire length of the frame.

According to another aspect of the invention, the first plate can delimit at least one through opening for inspection or access in correspondence with a connection portion between the first motor unit and the first plate and wherein the second plate defines at least one respective through opening of inspection or access at the connection between the second motor assembly and the second plate.

It is also a specific object of the invention, a movement system comprising a support and movement unit previously described and a gripping device connected, on opposite sides, to the first plate and to the second plate.

The advantages offered by the support and handling unit according to the invention are evident.

In particular, the support and handling unit according to the invention has a flexible use structure capable of ensuring precise and effective handling of a gripping device that can be associated with it.

In addition, the support and handling unit according to the invention includes handling members operatively connectable to the gripping device and configured to ensure the braking of the latter in the event of a malfunction, avoiding the falling of the gripping device itself along the frame.

The dimensions of the support and handling group are adaptable in the design phase since, as mentioned, the support and handling group has a simple and flexible structure in its design, in order to be easily adapted to the dimensions available, for example, in a slitter type sheet metal cutting line or more generally in correspondence with a tool magazine to be picked up/stored.

The present invention will now be described, by way of illustration, but not of limitation, according to its preferred embodiments, with particular reference to the Figures of the attached drawings, wherein:

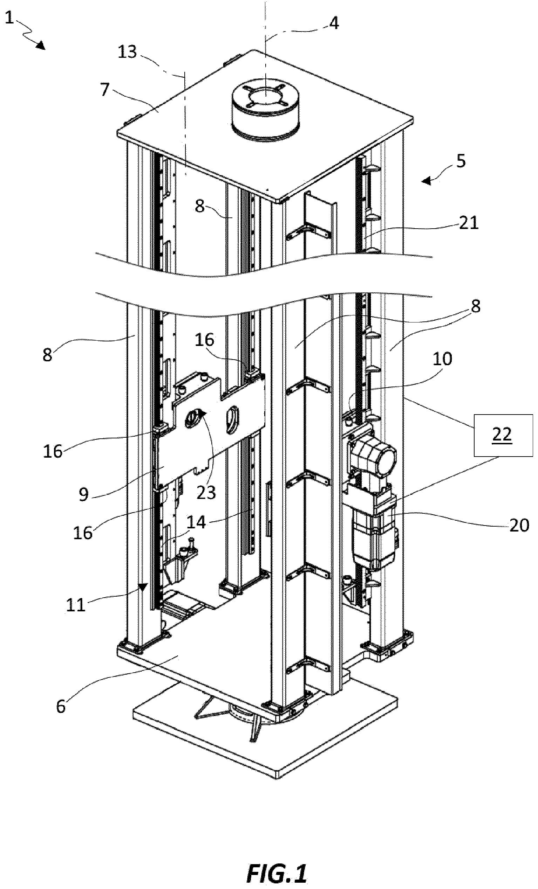

Figure 1 shows a perspective view of a support and handling unit according to the invention;
Figure 2 shows an enlarged detailed perspective view of some components of the support and handling unit according to the invention;
Figure 3 shows a detailed perspective view of some components of the support and handling unit from a different angle than that shown in Figure 2;
Figure 4 shows a perspective view of a support and handling unit according to the invention bearing a gripping device and operatively connected to a structure for handling the support and handling unit itself.

With reference to the attached Figures, a preferred embodiment can be observed of a support and handling assembly indicated as a whole with 1, configured to support and move a gripping device 2 in turn configured to take or release at least one tool with respect to a warehouse or, more generally, a pickup/release point.

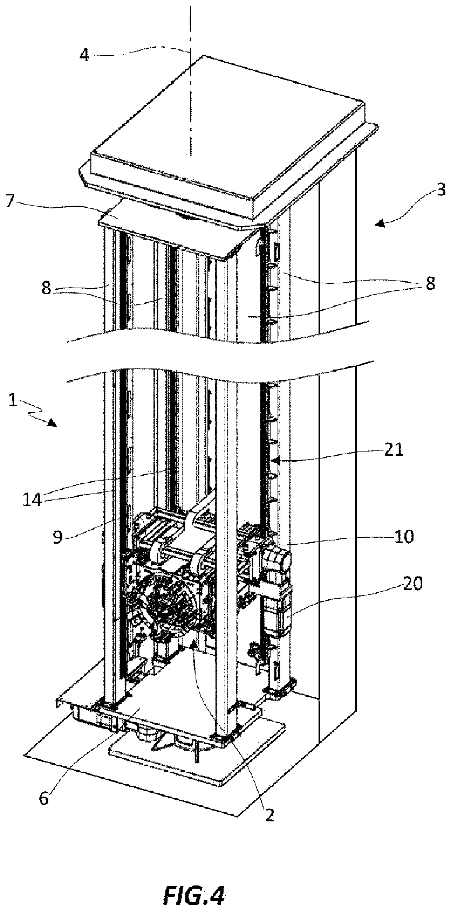

The support and handling unit 1 is configured to be connected, possibly movable, to a movement structure illustrated schematically in the attached Figure 4 and wholly indicated with 3.

The handling structure 3 is configured to allow the movement of the support and handling unit 1 along a predetermined path, for example a linear, curved path or a combination thereof, and/or the rotation of the support and handling unit 1 around to a rotation axis 4. The handling structure 3, optionally, can be constrained with respect to a plane on which it lies and allow only the rotation to a support and handling unit 1 operatively connected to it.

This rotating connection and the members necessary for its realization are considered available to the person skilled in the art and therefore will not be further described.

The handling structure 3 and the gripping device 2 do not form a specific object of the invention and therefore their description will be limited to the characteristics useful for understanding the support and handling unit 1.

The support and handling unit 1 comprises a column frame 5.

The frame 5 is delimited between a base 6 and a top element 7.

The frame 5 comprises column elements 8, spaced apart and mutually parallel. The column elements 8 mutually connect the base 6 and the top element 7 in a position spaced from each other.

Preferably, the column elements 8 are tubular elements with a rectangular or square section or the like.

The length of the column elements 8 determines the extension of the frame 5 along the axis of rotation 4 or, in other words, the distance between the base 6 and the top element 7.

The frame 5 is open laterally.

With reference to the embodiment illustrated in the attached Figures, the frame 5 has a base 6 with a rectangular plan development, if desired square, and comprises at least four column elements 8, each positioned at a respective vertex of the base 6.

The frame 5 supports guiding members operatively connected to the column elements 8, wherein the guiding members slidably guide a first plate 9 and a second plate 10 along opposite sides of the frame 5 itself.

The guide members comprise a first guide 11 and a second guide 12 connected to respective first and second elements between the column elements 8 and slidably engaged by a first plate 9 and a second plate 10 respectively.

More in detail, the first guide 11 is connected to at least two first column elements between the column elements 8 which are contiguous to each other, to which the first plate 9 is slidingly engaged, while the second guide 12 is connected to at least two seconds column elements between the column elements 8 contiguous to each other, opposite to those to which the first guide 11 is connected, and is slidingly engaged by the second plate 10.

In detail, the first plate 9 and the second plate 10 are opposite each other, each of them being operatively connected to a respective side of the frame 5 delimited, respectively, by two first elements between the column elements 8 and by two second elements between column elements 8.

The first plate 9 and the second plate 10 are movable slidingly, by translation, between the base 6 and the top element 7 of the frame 5, along a sliding direction 13.

In the event that the support and handling unit 1 is rotatably connected around a rotation axis 4, the sliding direction 13 is parallel or substantially parallel to the rotation axis 4.

The first plate 9 and the second plate 10 are independent from each other, i.e. they can be moved independently from each other.

The first plate 9 and the second plate 10 are configured to be operationally connected to opposite sides of a gripping device 2 (see Figure 4).

By connecting the gripping device 2 to the first plate 9 and to the second plate 10, in practice, the gripping device 2 is operationally connected to the support and handling unit 1.

Optionally, the support and handling unit 1 comprises at least one connecting element, not shown in detail in the attached Figures, for the reciprocal connection between the first plate 9 and the second plate 10. More optionally, the at least one connecting element is configured to act as a support or as a further support to a gripping device 2 connected to the first plate 9 and to the second plate 10.

As said, the guide members comprise a first guide 11 and a second guide 12.

The first guide 11 comprises a pair of first rails 14 wherein each rail of the first rails 14 is constrained to a respective column element belonging to a pair of column elements 8.

Similarly to what has been described in relation to the first guide 11, the second guide 12 comprises a pair of second rails 15, wherein each rail of the pair of second rails 15 is constrained to a respective column element belonging to a pair of column elements 8, opposite to that to which the first guide 11 is connected.

The first rails 14 and the second rails 15 are parallel to each other and to the column elements 8 to which they are connected.

The first rails 14 and the second rails 15 extend for the entire length of the frame 5 or substantially for the entire length of the frame 5, understood as the distance between the base 6 and the top element 7.

The first guide 11 comprises first runners 16 slidingly engaged along the first rails 14.

The first plate 9 has opposite ends each connected to a rail of the first rails 14 by means of at least one of the first runners 16, thus resulting in sliding engagement along the first rails 14 themselves.

The second guide 12 comprises second runners 17 slidingly engaged along the second rails 15.

The second plate 10 has opposite ends each connected to a rail of the second rails 15 by means of at least one of the second runners 17, thus resulting in sliding engagement along the second rails 15 themselves.

The first guide 11 and the second guide 12 respectively guide the translation of the first plate 9 and of the second plate 10 in the absence of any rotation, thus determining a fluid and sliding movement of the gripping device 2 when associated with the first plate 9 and the second plate 10.

In the attached Figures, the first guide 11 and the second guide 12 respectively comprise four first runners 16, two for each end of the first plate 9, and four second runners 17, two for each end of the second plate 10. It is understood that alternative embodiments comprising a first guide 11 and a second guide 12 comprising a different number of runners, for example two or six or more, are possible without any limitation.

Again, with reference to the embodiment illustrated in the attached Figures, the first rails 14 extend inside the frame 5 facing the second rails 15. It follows that the second rails 15 also face inside the frame 5. The first plate 9 and the second plate 10 are contained inside the frame 5 to provide a support inside the plan dimensions of the frame 5 itself for the gripping device 2.

The first plate 9 and the second plate 10 thus configured act as containment and dividing walls between the gripping device 2 and the frame 5, ensuring correct movement of the gripping device 2 which, in practice, cannot strike against the elements a column 8.

It is understood that alternative positioning of the first rails 14 and of the second rails 15 are possible with respect to what is described above, for example outside the frame 5.

The support and handling unit 1 comprises first handling members operatively connected to the first plate 9 and configured to determine the selective movement of the first plate 9 itself along the frame 5.

The first moving members comprise a first motor unit 18 connected to the first plate 9 and operatively connected to a first rack 19, in turn constrained to the frame 5.

More precisely, the first rack 19 is constrained to one of the column elements 8 to which the first plate 9 is operatively connected.

The first motor unit 18 comprises at least one motor configured to selectively rotate a pinion, which is in turn engaged along the first rack 19.

The direction of actuation in rotation and the number of revolutions of rotation of the pinion determine the direction of translation of the first plate 9 along the frame 5 and its stroke.

According to a preferred embodiment, the first motor unit 18 is connected to the first plate 9 in such a way that the axis of rotation of the pinion is normal to the first plate 9 itself and the first rack 19 is connected to a side of an element with column 8, facing the other column element 8 to which the first plate 9 is slidingly connected.

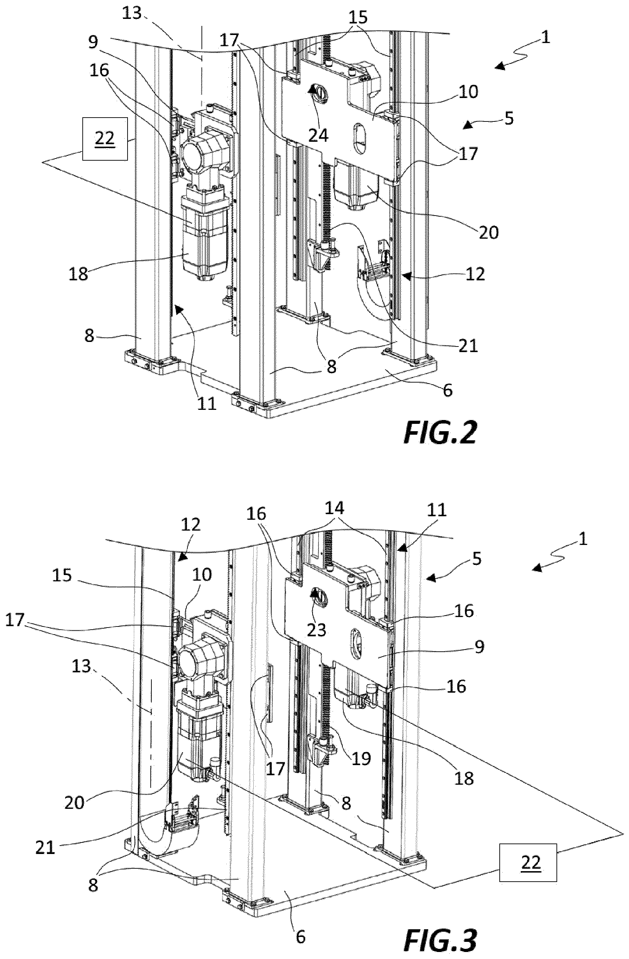

With reference to the embodiment illustrated in the attached Figures, the first rack 19 and one of the first rails 14 are constrained to the same of the column elements 8, along respective sides (see for example Figures 2 and 3).

In practice, the first rack 19 is interposed between the two column elements 8 to which the first plate 9 is slidingly connected.

This arrangement allows to optimize the overall dimensions of the support and handling unit 1 as well as making the components of the guide members and actuation members easily accessible for the benefit of their maintenance.

The support and handling unit 1 comprises second handling members operatively connected to the second plate 10 and configured to determine the selective movement of the second plate 10 itself along the frame 5.

The second moving members comprise a second motor unit 20 connected to the second plate 10, in a removable way, and operatively connected to a second rack 21 in turn constrained to one of the column elements 8 to which the second plate 10 is operatively connected.

The second motor unit 20 comprises at least one motor configured to selectively rotate a respective pinion, in turn engaged along the second rack 21 according to the same methods described in relation to the pinion of the first motor unit 18 to which reference is made.

According to a preferred embodiment, the second motor unit 20 is connected to the second plate 10 in such a way that the axis of rotation of the pinion is normal to the second plate 10 itself and the second rack 21 is connected to a side of an element with column 8, facing the other column element 8 to which the second plate 10 is slidingly connected.

The second rack 21 and one of the second rails 15 are both connected to the same among the column elements 8, along sides normal to each other (see for example Figures 2 and 3).

In practice, the second rack 21 is interposed between the two column elements 8 to which the second plate 10 is slidingly connected.

With reference to the embodiment illustrated in the attached Figures, the first rack 19 faces opposite the second rack 21, i.e. the first rack 19 faces one of the column elements 8 to which it is connected facing the second rack 21.

This arrangement allows the use of a first plate 9 and a second plate 10 configured equal or substantially equal to each other, thus reducing the number of components to be produced as well as simplifying the assembly of the support and handling unit 1.

It is understood that an alternative embodiment is possible, not shown in the attached Figures, comprising a different positioning of the first rack 19 relative to the second rack 21. For example, the first rack 19 and the second rack 21 are positioned symmetrically with respect to each other. a median plane for the support and handling group 1.

The support and handling unit 1 comprises at least one control logic unit, schematically illustrated in the attached Figures with 22, operatively connected to the first handling members and to the second handling members and configured to selectively control, optionally independently, their drive.

In particular, the at least one control logic unit 22 is configured to command and selectively control the operation of the first motor unit 18 and of the second motor unit 20.

The at least one logic control unit 22 is configured to command the operation or stop of the first motor unit 18 and, simultaneously in a synchronized or unsynchronized manner, the operation or stop of the second motor unit 20 to determine the lifting, lowering or parking in position of the first plate 9 and of the second plate 10, in a synchronized or non-synchronized way.

The at least one control logic unit 22 is configured to individually or simultaneously control the first motor unit 18 and the second motor unit 20.

In particular, by controlling the first motor unit 18 and the second motor unit 20 simultaneously and in a synchronized manner, the simultaneous translation of the first plate 9 and of the second plate 10 is determined and, therefore, the movement of the gripping device 2 operatively associable with them.

On the other hand, by controlling the first motor unit 18 and the second motor unit 20 individually or simultaneously but in a non-synchronized way, it is possible to determine at least a slight roll or misalignment between the first plate 9 and the second plate 10 to recover any mechanical tolerances between the first guide 11, the second guide 12 and the frame 5, between the first motor unit 18 and the first rack 19 or between the second motor unit 20 and the second rack 21 or, alternatively, to determine their locking in position.

In particular, the locking in position makes it possible to counteract a possible fall of the first plate 9 or of the second plate 10, when they are mutually connected by means of the gripping device 2, following the malfunction of one between the first motor unit 18 or the second motor unit 20, thus ensuring a high level of safety of use for the support and handling unit 1.

As said, the first plate 9 and the second plate 10 are positioned along opposite sides of the frame 5, favoring a balanced distribution of the weights along the same to the advantage of an overall balancing of the support and handling unit 1.

The first motor unit 18 and the second motor unit 20 are preferably of the self-braking type to prevent the possible fall of the first plate 9 and/or of the second plate 10 along the frame 5 in the event of a failure or malfunction of one of them.

When a gripping device 2 is installed along the support and movement assembly 1, it acts as a reciprocal connection element between the first plate 9 and the second plate 10. Therefore, in the case wherein one between the first motor unit 18 and the second motor unit 20 is subject to a failure, the keeping in position of the gripping device 2 along the frame 5 is ensured by the other between the second motor unit 20 and the first motor unit 18, to the advantage of a high level of safety of use of the support and handling unit 1.

The first plate 9 has at least one through opening 23 at the connection between the first motor unit 18 and the first plate 9 (see Figure 2). The at least one through opening 23 promotes the access to the pinion of the first motor unit 18 for carrying out ordinary or extraordinary maintenance or for a simple inspection.

Similarly, the second plate 10 has at least one respective through opening 24 at the connection between the second motor unit 20 and the second plate 10 for the same purposes described above in relation to the first plate 9, to which reference should be made.

Furthermore, the first handing members and the second handing members ensure correct transmission of motion to the first plate 9 and to the second plate 10 respectively, since the transmission of the motion occurs through respective drives of the pinion-rack type. This transmission is rigid and more effective than the transmissions used in support and handling units of the traditional type which comprise a transmission element such as a toothed belt or a piston drive.

A rack and pinion drive allows a constant dynamic response of the support and handling unit 1, not influenced by external variables including, for example, the operating temperature.

Furthermore, the distribution of the power on the first motor unit 18 and on the second motor unit 20, instead of on a single motor group as occurs in the solutions of the traditional technique, involves a more uniform dynamic response as well as the realization of a more compact and symmetrical solution.

In the foregoing, the preferred embodiments have been described and variants of the present invention have been suggested, but it is to be understood that those skilled in the art will be able to make modifications and changes without thereby departing from the relative scope of protection, as defined by the claims attached.

## Claims

1. Support and handling unit (1) configured to support and move a gripping device (2), wherein said support and handling unit (1) comprises:
- a frame (5), delimited between a base (6) and a top element (7), and by column elements (8) mutually spaced and parallel to each other, wherein said column elements (8) mutually connect said base (6) and said top element (7),
- guide members for slidingly guiding a first plate (9) and a second plate (10) along respective sides, opposite each other, of said frame (5), along a sliding direction (13),
- first handling members operatively connected to said first plate (9) and configured to determine the selective movement of said first plate (9) along said frame (5),
- second handling members operatively connected to said second plate (10) and configured to determine the selective movement of said second plate (10) along said frame (5), and
- at least one logic control unit (22) operatively connected to said first handling members and to said second handling members and configured to control in a synchronized or non-synchronized manner the operation of said first and second handling members,
wherein said guide members comprise a first guide (11) connected to at least two first column elements between said column elements (8) and a second guide (12) connected to at least two second column elements between said column elements (8) facing said at least two first column elements.

2. Support and handling unit (1) according to claim 1, wherein said first guide (11) comprises a pair of first rails (14) wherein each rail of said first rails (14) is constrained to a respective one of said first column elements between said column elements (8) and wherein said second guide (12) comprises a pair of second rails (15) wherein each rail of said second rails (15) is constrained to a respective one of said second elements column-like between said column elements (8), said first rails (14) and said second rails (15) being parallel to each other and to said column elements (8).

3. Support and handling unit (1) according to claim 2, wherein said first rails (14) and said second rails (15) extend for the entire length of said frame (5) or substantially for the entire length of said frame (5).

4. Support and handling unit (1) according to claim 2 or 3, wherein said first rails (14) protrude inside said frame (5) facing said second rails (15).

5. Support and handling unit (1) according to any one of claims 1 to 4, wherein said first guide (11) comprises first runners (16) slidingly engaged along said first rails (14), wherein said first plate (9) has opposite ends each connected to a rail of said first rails (14) by means of at least one of said first runners (16) and wherein said second guide (12) comprises second runners (17) slidingly engaged along said second rails (15), wherein said second plate (10) has opposite ends each connected to a rail of said second rails (15) by means of at least one of said second runners (17).

6. Support and handling unit (1) according to any one of the preceding claims, wherein said first handling members comprise a first motor unit (18) connected to said first plate (9) comprising a pinion engaged along a first rack (19) constrained to an element between said column elements (8) to which said first plate (9) is connected and wherein said second handling members comprise a second motor unit (20) connected to said second plate (10) and comprising a pinion in engagement along a second rack (21) constrained to an element between said column elements (8) to which said second plate (10) is connected.

7. Support and handling unit (1) according to claim 6, wherein said first rack (19) and said second rack (21) extend for the entire length of said frame (5) or substantially for the entire length of said frame (5).

8. Support and handling unit (1) according to claim 6 or 7, wherein said first plate (9) defines at least one through opening (23) for inspection or access at a connection portion between said first motor assembly (19) and said first plate (9) and wherein said second plate (10) defines at least a respective through opening (24) for inspection or access at the connection between said second motor unit (20) and said second plate (10).

9. Handling system comprising a support and handling unit (1) according to any one of claims 1 to 8 and a gripping device (2) connected, at opposite sides thereof, to said first plate (9) and to said second plate (10).
